# EUROPEAN PATENT SPECIFICATION

(11) **EP 3 804 657 B1**
(45) Date of publication and mention of the grant of the patent: **16.08.2023**
(21) Application number: 20200891.8
(22) Date of filing: 08.10.2020
(51) Int. Cl.: A61C 17/22, A61C 17/26, A61C 17/34, A46B 13/02, A46B 15/00, A46B 7/04, A61C 19/06

(54) **INTERCHANGEABLE PORTION FOR A TOOTHBRUSH**
AUSWECHSELBARER TEIL FÜR EINE ZAHNBÜRSTE
PARTIE INTERCHANGEABLE POUR UNE BROSSE À DENTS

(30) Priority: 08.10.2019 IT 201900018233
(43) Date of publication of application: 14.04.2021
(73) Proprietor: Insmile S.r.l., 40127 Bologna (IT)
(72) Inventor: CALICETI, Filippo, 40127 Bologna (IT)
(74) Representative: Maccagnan, Matteo

(56) References cited:
- WO-A1-2017/139256
- US-A1- 2009 083 924

## Description

### TECHNICAL FIELD

The present invention relates to an interchangeable portion for a toothbrush, in particular for an electrically operated toothbrush.

### PRIOR ART

In the field of electrically operated toothbrushes, toothbrushes comprising a handpiece and an interchangeable portion provided with a plurality of bristles and mounted on the handpiece in a removable manner are known. In detail, the handpiece is configured to house on the inside an electric actuator designed to cause a given movement, generally a vibrating movement, in the toothbrush so as to optimize the cleaning action of the bristles during the brushing.

A known interchangeable portion generally has an oblong shape and has the plurality of bristles at one end and a coupling section at the opposite end.

The interchangeable portion is also configured to house on the inside at least one light source designed to emit a light beam towards THE outside of the interchangeable portion at the bristles so as to carry out a sanitizing and/or whitening action on the teeth during their brushing and power supply means for supplying power to the light source. In some cases, instead, the light source is power supplied by power supply means arranged inside the handpiece and connected to the light source by means of at least one light guide.

The interchangeable portion of the type described above has some drawbacks mainly linked to the fact that such interchangeable portion is quite complex as it has the light source and the power supply means of the light source on the inside, or alternatively to the power supply means, at least part of the light guide designed to connect the light source to the power supply means. From this it follows that each periodic replacement of the interchangeable portion also entails the replacement and the disposal of the light source and of the power supply means of the light source, or of at least part of the light guide, with evident drawbacks in environmental terms as well as in terms of disposal costs.

U.S. Patent Application No. US2009/0083924A1 discloses a light emitting toothbrush comprising a handle with a grip at a proximal end and a replaceable brush head at a distal end thereof. The replaceable brush head has at least one group of bristles permanently affixed to the replaceable brush head and at least one blue light emitter is provided on an upper surface of the replaceable brush head for emitting blue light in a direction generally parallel to the bristles. A power source is located inside the handle for energizing the blue light emitter.

International Application No. WO2017/139256A1 discloses a toothbrush having one or more light sources with an electronic interlock control device preventing operation of the light source when the toothbrush is removed from the user's mouth. The electronic interlock control over operation is necessary to prevent accidental eye exposure to the high intensity light source with a wavelength in the range of about 400 nm to about 1000 nm. The light-emitting toothbrush activates upon entering the user's mouth but deactivates immediately when removed, thus protecting the user's eyes from direct exposure to the high power light source contained in the brush head.

### DESCRIPTION OF THE INVENTION

The object of the present invention is to provide an interchangeable portion which is free from the aforementioned drawbacks, which is simple and cost-effective to implement, and which can be easily mounted on the handpieces of the known electrically operated toothbrushes.

In accordance with the present invention an interchangeable portion is provided for a toothbrush according to what claimed in the appended claims.

The claims describe preferred embodiments of the present invention forming an integral part of the present description.

### BRIEF DESCRIPTION OF THE DRAWINGS

A preferred embodiment is described hereafter for a better understanding of the present invention, by way of non-limiting example and with reference to the accompanying drawings, wherein:
- Figure 1 illustrates a schematic front view of a toothbrush comprising an interchangeable portion made in accordance with the present invention;
- Figure 2 illustrates a perspective view of the toothbrush of Figure 1 in an inoperative configuration, wherein the interchangeable portion is removed from a handpiece of the toothbrush and a head of the interchangeable portion is removed from the remaining interchangeable portion; and
- Figure 3 illustrates a perspective view of the interchangeable portion and of the head of Figure 2 in an inoperative configuration wherein the head is removed from the remaining interchangeable portion.

### DETAILED DESCRIPTION OF THE INVENTION

With reference to the accompanying figures, reference numeral 1 indicates as a whole an interchangeable portion for a toothbrush 2, in particular for an electrically operated toothbrush 2.

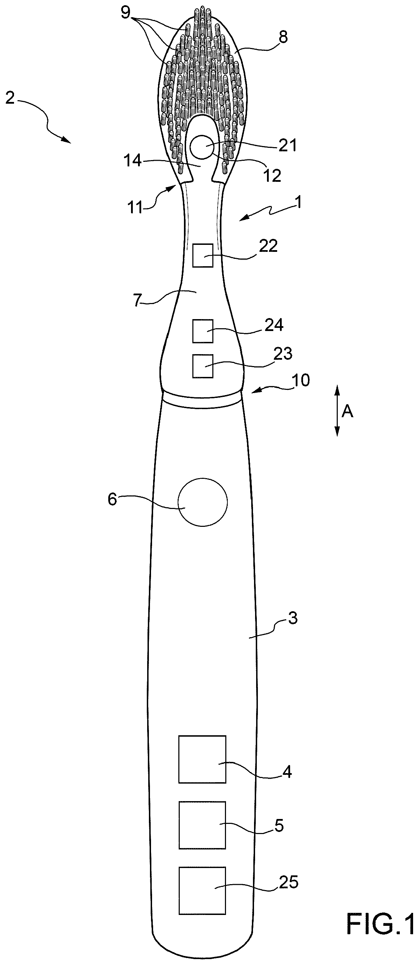

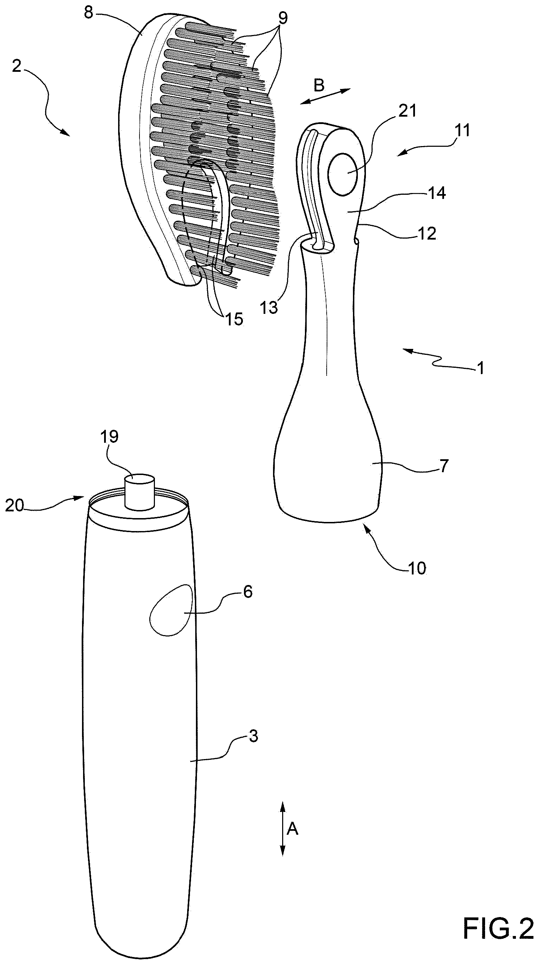

The toothbrush 2 illustrated in Figures 1 and 2 comprises a handpiece 3 and the interchangeable portion 1 is mounted on the handpiece 3 in a removable manner.

The handpiece 3 has an oblong shape which extends along a defined direction A (substantially vertical when the handpiece 3 is lying on a support surface), defines a handle portion of the toothbrush 1, and houses on the inside an electric actuator 4, for example an electric motor, designed to cause a given movement in the toothbrush 2, in particular a vibrating movement, for optimizing the cleaning action during the brushing.

Advantageously but not necessarily, the handpiece 3 comprises a control unit 5 for controlling the actuation of the electric actuator 4 and control means 6, in particular a control button 6, for controlling the control unit 5.

According to the embodiment illustrated in the accompanying figures, the interchangeable portion 1 comprises: a support body 7, which has an oblong shape (which in use extends along the above described direction A) and is configured to be coupled to the handpiece 3 in a removable manner; and a head 8 which is provided with a plurality of bristles 9 and is carried by the support body 7, i.e. it is mounted on the support body 7 in a removable manner, so as to be interchangeable as well.

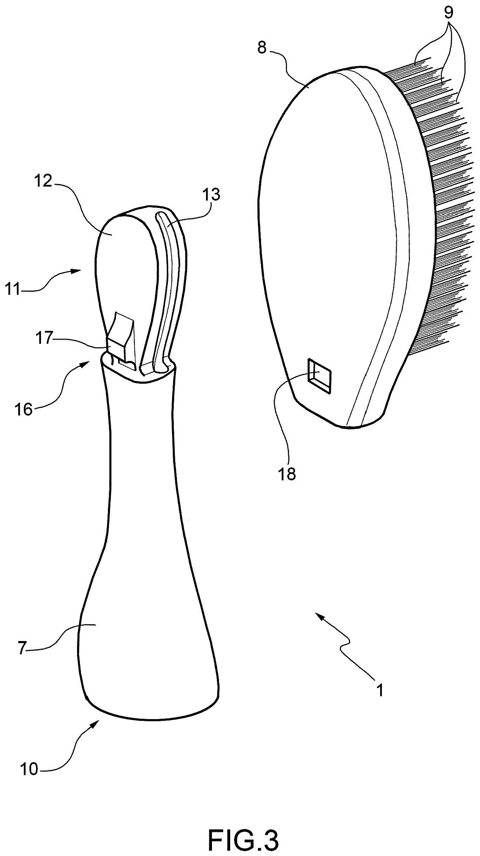

In accordance with the non-limiting embodiments illustrated for example in Figures 2 and 3, the support body 7 comprises at one end a coupling section 10 for being coupled to the handpiece 3 in a removable manner and at the opposite end a coupling section 11 for being coupled to the head 8 in a removable manner.

In detail, the support body 7 has at the coupling section 11 an end rod 12 which carries at least one coupling guide 13 designed to be coupled in a removable manner to the coupling means 15 carried by the head 8.

In the non-limiting case illustrated in the accompanying figures, the coupling section 11 comprises two parallel and opposite coupling guides 13 which protrude laterally (i.e. along a direction B orthogonal, in particular transverse, to the direction A) from opposite sides of the end rod 12 and the head 8 has a substantially U-shape, and is provided with two internal grooves 15 facing each other (which constitute the aforementioned coupling means 15) and designed to engage in a sliding manner with the coupling guides 13 to move the head 8 in the direction A between an operating position (Figure 1), wherein the head 8 is mounted on the support body 7, and a non-operating position (Figures 2 and 3), wherein the head 8 is removed from the support body 7.

Advantageously but not necessarily, the head 8 is locked on the support body 7 in its operating position by means of a hooking device 16 comprising a tooth 17 protruding from the end rod 12 and designed to be inserted inside a groove 18 obtained through the head 8 to receive and hold the tooth 17.

In use, or at least when the head 8 is mounted on the support body 7, the end rod 12 extends inside the head 8, and is delimited by a face 14 which is substantially flat and perpendicular to the bristles 9 of the head 8.

Always in accordance with the preferred but non-limiting embodiment illustrated in Figures 2 and 3, the coupling section 10 has a housing (not illustrated) designed to receive a coupling element 19 arranged at one end 20 of the handpiece 3, which end 19 is designed to receive the interchangeable portion 1.

With particular reference to Figures 1 and 2, the interchangeable portion 1 further comprises at least one light source 21, which in use is arranged at the head 8 so as to emit a light beam towards the outside of the head 8; and a power supply unit 22 housed inside the support body 7 so as to supply power to the light source 20.

In detail, the light source 21 is arranged in the end rod 12 of the support body 7 at the face 14 and is shaped so that the light beam emitted by such light source 21 is transmitted towards the outside and, at the same time, hits at least part of the bristles 9, so as to carry out a whitening and bactericidal action on the teeth of the user (not shown) during their brushing and, at the same time, carry out a bactericidal and sterilizing action on the bristles 9 after their use.

Advantageously but not necessarily, the light source 21 emits a light having a wavelength which falls within the range of the visible light; preferably but not necessarily, such light has a wavelength of about 490nm (blue light).

In particular, in accordance with some advantageous but non-limiting embodiments, such as the one illustrated in Figure 1, the interchangeable portion 1 comprises movement detection means 23 for detecting the movements of the interchangeable portion 1 and control means 24 for actuating the light source 21 as a result of the detected movements. In particular, the detection means 23 are configured to detect the movements of the interchangeable portion 1 and send an actuation signal to the control means 24 every time they detect a movement, and the control means 24 are configured to switch off the light source 21 in the absence of detected movements for a given time interval, i.e. to actuate the light source 21 for a fixed time interval every time they receive an actuation signal.

In this way, when the user (not shown) presses the control button 6, the control unit 5 actuates the electric actuator 4 for transmitting the vibrating movement to the toothbrush 2, the detection means 23 detect such vibration and, consequently, they send an actuation signal to the control means 24, which control means 24 actuate the light source 21 for a certain fixed time interval, so that when the vibration ends (following a subsequent pressure on the control button 6), the detection means 23 stop sending actuation signals to the control means 24 and the light source 21 remains active up to the end of the time interval fixed by the last actuation signal received. In other words, advantageously, the light source 21 remains switched on also after the end of the use of the toothbrush 2 by the user (i.e. after the user presses the control button 6 to switch off the toothbrush 2), so as to clean and sterilize the bristles 9 which are hit by the light beam. Advantageously, the risk of bacterial contamination of the bristles 9 will be reduced.

Advantageously, the control means 24 are configured to actuate the light source 21 only when the extent of the vibrations, i.e. the frequency of the vibrations, exceeds a certain limit value, so as to prevent any movement of the toothbrush 2 and/or of the interchangeable portion 1 from causing an undesired actuation of the light source 21.

In accordance with a further embodiment of the invention, the power supply unit 22 comprises a vibration energy collecting device (not shown) which is configured to generate electric energy when subjected to mechanical vibrations, and optionally a storage device (not shown) designed to store the electric energy produced by the vibration energy collecting device.

In particular, the vibration energy collecting device (known per se and not described in detail herein) comprises at least movement detection means for detecting the movements of the interchangeable portion 1, electric energy generating means and control means for actuating the electric energy generating means as a consequence of the detected movements. In analogy to what has already been said with reference to the control means 24, the control means of the vibration energy collecting device are also preferably configured to actuate the electric energy generating means when the extent of the vibrations, i.e. the frequency of the vibrations, exceeds a certain limit value, so as to prevent any movement of the toothbrush 2 and/or of the interchangeable portion 1 from causing an undesired actuation of the light source 21.

Advantageously but not necessarily, the detection means and the control means of the vibration energy collecting device consist of (i.e. coincide with) the movement detection means 23 and the control means 24, respectively.

The toothbrush 2 illustrated in Figures 1 and 2 also comprises power supply means 25, for example a rechargeable battery, arranged inside the handpiece 3 for electrically supplying power to the electric actuator 4.

In order to extend the useful life of the interchangeable portion 1, the head 8 and at least the end rod 12 of the support body 7 are made of two different plastic materials having respective hardness values, and in particular the material with which the head 8 is made has a hardness value lower than the hardness value of the end rod 12. In other words, the material of the head 8 is softer than the material of the end rod 12. In this way, the rubbing wear between the head 8 and the end rod 12 will mainly affect the head 8, which is the interchangeable component intended to be changed periodically, thus increasing the useful life of the interchangeable portion 1 which is instead intended to be changed much less frequently, i.e. when it stops working. Furthermore, in this way it will be easier to mount the head 8 on the end rod 12, since the head 8 can deform during the coupling with the end rod 12.

In this regard, according to a further variant of the invention, the coupling guides 13 and the internal grooves 15 are shaped for creating a coupling between the head 8 and the support body 7 of the interchangeable portion of the interlocking type, and not sliding like the one described above, therefore especially in this case the different hardness facilitates the mounting of the head 8 on the end rod 12. Also in this variant, in order to ensure with greater security the coupling between the head 8 and the support body 7 in the operating portion, the above-described hooking means 16 is provided.

According to a further not illustrated embodiment of the invention, the removable coupling between the handpiece 3 and the interchangeable portion 1 can take place by screwing the interchangeable portion 1 onto the handpiece 3.

In accordance with an embodiment not illustrated, the electric actuator 4, alternatively or in addition to the vibrations, is suited to cause, in use, a rotatory motion in the bristles 9. In this case, the handpiece 3 comprises a transmission system which, when the interchangeable portion 1 is mounted on the handpiece 3, connects to a further transmission system arranged in the interchangeable portion 1 so as to transfer the rotatory motion from the electric actuator 4 to the head 8 and then to the bristles 9, thus optimizing the cleaning action of the bristles 9 during the brushing.

The interchangeable portion 1 for an electrically operated toothbrush 2 described above has numerous advantages.

In the first place, since the head 8 is in turn interchangeable, i.e. removable in a simple and rapid manner from the rest of the interchangeable portion 1, it is possible to periodically replace only the head 8 which is relatively simple and inexpensive continuing, instead, to use the same interchangeable portion 1 (i.e. the same support body 7 with all the components contained therein), unless the interchangeable portion 1 breaks or malfunctions. In other words, since almost all of the more complex and expensive components of the interchangeable portion 1, i.e. the light source 21, the power supply unit 22, the control means 24, and the detection means 23 are contained in the support body 7, the periodic replacement of the head 8 for reasons of wear or of hygiene of the bristles 9 will not involve the replacement and therefore the disposal of such components, with considerable advantages both in economic and environmental terms.

Finally, the interchangeable portion 1 described above is simple and cost-effective to manufacture and is adaptable, i.e. can be mounted in a simple and rapid manner, to the handpieces 3 already present on the market, therefore it represents an advantageous alternative to the known interchangeable portions.

## Claims

1. - An interchangeable portion (1) for a toothbrush (2) having a handpiece (3) housing an electric actuator (4) suited to cause a given movement, in particular a vibrating movement, in the toothbrush (2), the interchangeable portion (1) comprises:
a support body (7), which is configured to be coupled to said handpiece (3) in a removable manner and carries a head (8) provided with a plurality of bristles (9) and a light source (21), which is arranged in the area of said head (8) so as to emit a light beam towards the outside of the head (8) wherein the head (8) is mounted on the support body (7) a removable manner so as to be interchangeable as well;
the interchangeable portion (1) is **characterized in that** it comprises a power supply unit (22) housed on the inside of the support body (7) in order to supply power to the light source (21).

2. - An interchangeable portion (1) according to claim 1, and comprising first movement detection means (23) to detect movements of the interchangeable portion (1) and first control means (24) to activate the light source (21) as a consequence of the detected movements.

3. - An interchangeable portion (1) according to claim 1 or 2, wherein the power supply unit (22) comprises a storage device designed to store the energy produced by the vibration energy collecting device.

4. An interchangeable portion (1) according to any one of the preceding claims, wherein the power supply unit (22) comprises a vibration energy collecting device, which is configured to generate electric energy when subjected to mechanical vibrations.

5. An interchangeable portion (1) according to claim 4, wherein the vibration energy collecting device comprises second movement detection means to detect movements of the interchangeable portion, electric energy generating means to generate electric energy and second control means to activate the electric energy generating means as a consequence of the detected movements.

6. An interchangeable portion (1) according to claim 5, wherein said second detection means consist of (coincide with) said first movement detection means (23) and said second control means consist of (coincide with) said first control means (24).

7. An interchangeable portion (1) according to any one of the claims from 2 to 6, wherein said first control means (24) are configured to switch off the light source (21) in the absence of detected movements for a given amount of time.

8. - An interchangeable portion (1) according to any one of the claims from 1 to 7, wherein:
the support body (7) comprises a first coupling section (10) to be coupled to the handpiece (3) of the toothbrush (2) in a removable manner and a second coupling portion (10) provided with at least one coupling guide (13);
the head has coupling means (15) to be coupled to the coupling guide (13).

9. - An interchangeable portion (1) according to claim 8 and comprising hooking means (16) to lock the head (8) along the coupling guide (13), when the coupling means (15) are coupled to the coupling guide (13).

10. An interchangeable portion (1) according to claim 8 or 9, wherein:
the support body (7) has an oblong shape and an end rod (12) arranged at an end (11) of the support body (7) opposite relative to the first coupling section (10);
the end rod (12) comprises the coupling guide (13), which, in use, extends inside the head (8) and is delimited by a face (14), which is substantially flat and perpendicular to the bristles (9) of the head (8);
the light source (21) faces the face (14) of the end rod (12) .

11. - An interchangeable portion (1) according to claim 10, wherein at least the end rod (12) of the support body (7) is made of a plastic material having a first hardness value and the head (8) is made of a plastic material having a second hardness value, which is smaller than the first hardness value.

12. - An interchangeable portion (1) according to any one of the claims from 1 to 11, wherein the bristles (9) are arranged around the light source (21) so that the light beam at least partly irradiates the bristles (9) of the head.

13. - A toothbrush (2) comprising:
a handpiece (3);
an electric actuator (4) arranged inside the handpiece (3) and designed to cause a given movement in the toothbrush (2) ;
power supply means (25) arranged inside the handpiece (3) and operated in order to supply power to the electric actuator (4);
control means (6) carried by the handpiece (3) and designed to control the activation or the deactivation of the electric actuator (4);
an interchangeable portion (1) according to any one of the claims from 1 to 12 mounted on the handpiece (3) in a removable manner and so as to transfer the given movement caused by the electric actuator (4) from the handpiece to the plurality of bristles (9).

## Patentansprüche

1. Auswechselbarer Teil (1) für eine Zahnbürste (2), die ein Handstück (3) aufweist, in dem ein elektrisches Betätigungselement (4) untergebracht ist, das geeignet ist, eine gegebene Bewegung, insbesondere eine vibrierende Bewegung, in der Zahnbürste (2) zu veranlassen, wobei der auswechselbare Teil (1) umfasst:
einen Tragkörper (7), der ausgestaltet ist, an das Handstück (3) in abnehmbarer Weise gekoppelt zu werden, und einen Kopf (8), der mit einer Vielzahl von Borsten (9) versehen ist, und eine Lichtquelle (21) trägt, die im Bereich des Kopfes (8) angeordnet ist, sodass ein Lichtstrahl zur Außenseite des Kopfes (8) ausgesendet wird, wobei der Kopf (8) auf dem Tragkörper (7) in abnehmbarer Weise befestigt ist, sodass er ebenso auswechselbar ist;
wobei der auswechselbare Teil (1) **dadurch gekennzeichnet ist, dass** er eine Stromversorgungseinheit (22) umfasst, die im Inneren des Tragkörpers (7) untergebracht ist, um die Lichtquelle (21) mit Strom zu versorgen.

2. Auswechselbarer Teil (1) nach Anspruch 1 und umfassend erste Bewegungserfassungsmittel (23), um Bewegungen des auswechselbaren Teils (1) zu erfassen, und erste Steuermittel (24), um die Lichtquelle (21) infolge der erfassten Bewegungen zu aktivieren.

3. Auswechselbarer Teil (1) nach Anspruch 1 oder 2, wobei die Stromversorgungseinheit (22) eine Speichervorrichtung umfasst, die ausgeführt ist, die Energie zu speichern, die von der Vibrationsenergie-Sammelvorrichtung produziert wird.

4. Auswechselbarer Teil (1) nach einem der vorhergehenden Ansprüche, wobei die Stromversorgungseinheit (22) eine Vibrationsenergie-Sammelvorrichtung umfasst, die ausgestaltet ist, elektrische Energie zu erzeugen, wenn sie mechanischen Vibrationen ausgesetzt ist.

5. Auswechselbarer Teil (1) nach Anspruch 4, wobei die Vibrationsenergie-Sammelvorrichtung zweite Bewegungserfassungsmittel, um Bewegungen des auswechselbaren Teils zu erfassen, elektrische Energieerzeugungsmittel, um elektrische Energie zu erzeugen, und zweite Steuermittel umfasst, um die elektrischen Energieerzeugungsmittel infolge der erfassten Bewegungen zu aktivieren.

6. Auswechselbarer Teil (1) nach Anspruch 5, wobei die zweiten Erfassungsmittel aus den ersten Bewegungserfassungsmitteln (23) bestehen (damit zusammenfallen) und die zweiten Steuermittel aus den ersten Steuermitteln (24) bestehen (damit zusammenfallen).

7. Auswechselbarer Teil (1) nach einem der Ansprüche 2 bis 6, wobei die ersten Steuermittel (24) ausgestaltet sind, die Lichtquelle (21) auszuschalten, wenn erfasste Bewegungen für ein gegebenes Zeitausmaß fehlen.

8. Auswechselbarer Teil (1) nach einem der Ansprüche 1 bis 7, wobei:
der Tragkörper (7) einen ersten Kopplungsabschnitt (10), der an das Handstück (3) der Zahnbürste (2) in abnehmbarer Weise zu koppeln ist, und einen zweiten Kopplungsabschnitt (10) umfasst, der mit mindestens einer Kopplungsführung (13) versehen ist;
der Kopf Kopplungsmittel (15) aufweist, die an die Kopplungsführung (13) zu koppeln sind.

9. Auswechselbarer Teil (1) nach Anspruch 8 und umfassend Einhakmittel (16), um den Kopf (8) entlang der Kopplungsführung (13) zu verriegeln, wenn die Kopplungsmittel (15) an die Kopplungsführung (13) gekoppelt sind.

10. Auswechselbarer Teil (1) nach Anspruch 8 oder 9, wobei:
der Tragkörper (7) eine längliche Form und eine Endstange (12) aufweist, die an einem Ende (11) des Tragkörpers (7) gegenüberliegend in Bezug auf den ersten Kopplungsabschnitt (10) angeordnet ist;
die Endstange (12) die Kopplungsführung (13) umfasst, die sich, in Verwendung, innerhalb des Kopfes (8) erstreckt und von einer Fläche (14) begrenzt wird, die im Wesentlichen flach ist und senkrecht zu den Borsten (9) des Kopfes (8) verläuft;
die Lichtquelle (21) der Fläche (14) der Endstange (12) zugewandt ist.

11. Auswechselbarer Teil (1) nach Anspruch 10, wobei mindestens die Endstange (12) des Tragkörpers (7) aus einem Kunststoffmaterial hergestellt ist, das einen ersten Härtewert aufweist, und der Kopf (8) aus einem Kunststoffmaterial hergestellt ist, das einen zweiten Härtewert aufweist, der kleiner ist als der erste Härtewert.

12. Auswechselbarer Teil (1) nach einem der Ansprüche 1 bis 11, wobei die Borsten (9) um die Lichtquelle (21) angeordnet sind, sodass der Lichtstrahl mindestens teilweise die Borsten (9) des Kopfes bestrahlt.

13. Zahnbürste (2), umfassend:
ein Handstück (3);
ein elektrisches Betätigungselement (4), das im Inneren des Handstücks (3) angeordnet und ausgeführt ist, eine gegebene Bewegung in der Zahnbürste (2) zu veranlassen;
Stromversorgungsmittel (25), die im Inneren des Handstücks (3) angeordnet sind und betrieben werden, um das elektrische Betätigungselement (4) mit Strom zu versorgen;
Steuermittel (6), die von dem Handstück (3) getragen werden und ausgeführt sind, die Aktivierung oder die Deaktivierung des elektrischen Betätigungselements (4) zu steuern;
einen auswechselbaren Teil (1) nach einem der Ansprüche 1 bis 12, der auf dem Handstück (3) in abnehmbarer Weise befestigt ist, sodass die gegebene Bewegung, die von dem elektrischen Betätigungselement (4) veranlasst wird, von dem Handstück auf die Vielzahl von Borsten (9) übertragen wird.

## Revendications

1. Partie interchangeable (1) pour brosse à dents (2) comportant une pièce à main (3) abritant un actionneur électrique (4) apte à provoquer un mouvement donné, notamment un mouvement vibratoire, dans la brosse à dents (2), la partie interchangeable (1) comprenant :
un corps de support (7), qui est configuré pour être couplé à ladite pièce à main (3) de manière amovible et portant une tête (8) munie d'une pluralité de poils (9) et une source lumineuse (21), qui est agencée au niveau de ladite tête (8) de manière à émettre un faisceau lumineux vers l'extérieur de la tête dans laquelle la tête (8) est montée sur le corps de support (7) de manière amovible de manière à être également interchangeable ;
la partie interchangeable (1) est **caractérisée en ce qu'**elle comprend un bloc d'alimentation (22) logé à l'intérieur du corps de support (7) pour alimenter la source de lumière (21).

2. Partie interchangeable (1) selon la revendication 1, et comprenant des premiers moyens de détection de mouvement (23) pour détecter les mouvements de la partie interchangeable (1) et des premiers moyens de commande (24) pour activer la source lumineuse (21) en conséquence des mouvements détectés.

3. Partie interchangeable (1) selon l'une des revendications 1 ou 2, dans laquelle le bloc d'alimentation (22) comprend un dispositif de stockage destiné à stocker l'énergie produite par le dispositif de collecte d'énergie de vibrations.

4. Partie interchangeable (1) selon l'une des revendications précédentes, dans laquelle le bloc d'alimentation (22) comprend un dispositif de collecte d'énergie de vibrations, qui est configuré pour générer de l'énergie électrique lorsqu'il est soumis à des vibrations mécaniques.

5. Partie interchangeable (1) selon la revendication 4, dans laquelle le dispositif de collecte d'énergie de vibrations comprend des seconds moyens de détection de mouvement pour détecter les mouvements de la partie interchangeable, des moyens de génération d'énergie électrique pour générer de l'énergie électrique et des seconds moyens de commande pour activer les moyens de génération d'énergie électrique en conséquence des mouvements détectés.

6. Partie interchangeable (1) selon la revendication 5, dans laquelle lesdits seconds moyens de détection consistent en (coïncident avec) lesdits premiers moyens de détection de mouvement (23) et lesdits seconds moyens de commande consistent en (coïncident avec) lesdits premiers moyens de commande (24).

7. Partie interchangeable (1) selon l'une des revendications 2 à 6, dans laquelle lesdits premiers moyens de commande (24) sont configurés pour éteindre la source lumineuse (21) en l'absence de mouvements détectés pour une durée donnée de temps.

8. Partie interchangeable (1) selon l'une des revendications 1 à 7, dans laquelle :
le corps de support (7) comprend une première section de couplage (10) à coupler de manière amovible à la pièce à main (3) de la brosse à dents (2) et une seconde partie de couplage (10) munie d'au moins un guide de couplage (13);
la tête comporte des moyens de couplage (15) destinés à être couplé au guide de couplage (13).

9. Partie interchangeable (1) selon la revendication 8 et comprenant des moyens d'accrochage (16) pour verrouiller la tête (8) le long du guide de couplage (13), lorsque les moyens de couplage (15) sont couplés au guide de couplage (13 ).

10. Partie interchangeable (1) selon la revendication 8 ou 9, dans laquelle :
le corps de support (7) a une forme oblongue et une tige d'extrémité (12) disposée à une extrémité (11) du corps de support (7) opposée par rapport à la première section de couplage (10) ; la tige d'extrémité (12) comporte le guide de couplage (13) qui, en utilisation, s'étend à l'intérieur de la tête (8) et est délimité par une face (14), sensiblement plane et perpendiculaire aux poils (9) de la tête (8);
la source lumineuse (21) fait face à la face (14) de la tige d'extrémité (12)

11. Partie interchangeable (1) selon la revendication 10, dans laquelle au moins la tige d'extrémité (12) du corps de support (7) est réalisée en une matière plastique ayant une première valeur de dureté et la tête (8) est réalisée en une matière plastique ayant une seconde valeur de dureté, qui est inférieure à la première valeur de dureté.

12. Partie interchangeable (1) selon l'une des revendications 1 à 11, dans laquelle les poils (9) sont disposés autour de la source lumineuse (21) de sorte que le faisceau lumineux irradie au moins en partie les poils (9) de la tête.

13. Brosse à dents (2) comprenant :
une pièce à main (3);
un actionneur électrique (4) disposé à l'intérieur de la pièce à main (3) et destiné à provoquer un mouvement donné dans la brosse à dents (2) ;
des moyens d'alimentation (25) agencés à l'intérieur de la pièce à main (3) et actionnés pour alimenter l'actionneur électrique (4) ;
des moyens de commande (6) portés par la pièce à main (3) et destinés à commander l'activation ou la désactivation de l'actionneur électrique (4) ;
une partie interchangeable (1) selon l'une des revendications 1 à 12 montée sur la pièce à main (3) de manière amovible et de manière à transférer le mouvement donné provoqué par l'actionneur électrique (4) de la pièce à main à la pluralité de poils (9).
